# EUROPEAN PATENT APPLICATION

(11) **EP 1 672 922 A2**
(43) Date of publication of application: **21.06.2006**
(21) Application number: 05108138.8
(22) Date of filing: 06.09.2005
(51) Int. Cl.: H04N 5/775

(54) **ELECTRONIC DEVICE AND METHOD OF CONTROLLING SAME**

(30) Priority: 20.12.2004 JP 2004368203
(71) Applicant: Kabushi Kaisha Toshiba, Tokyo 105-8001 (JP)
(72) Inventor: ANDO, Morio, 105-8001, Tokyo (JP)
(74) Representative: Henkel, Feiler & Hänzel

(57) **Abstract**

Data indicating a plurality of receiving specifications are stored in a memory unit (40). When an electronic device is set with its corresponding receiving specifications, data indicating the corresponding receiving specifications is read out from the memory unit (40) and temporarily memorizes the same into a memory (34a). When a demand for acquiring the data indicating the receiving specifications is received from the outside, the data saved in the memory unit (34) is outputted.

## Description

The present invention relates to an electronic device for receiving and processing signals, such as video signals or audio signals, from an externally connected apparatus and a method of controlling the electronic device.

As is well known, digital visual interface (DVI) standards have widely been provided for transmission of digital video signals. Recently, high definition multimedia interface (HDMI) standards have been used as digital signal transmission standards, an improvement of the DVI standards.

The HDMI standards include multiplexing a digital audio signal during a blanking period of a digital video signal for transmission of audio data, transmitting the digital video signal in RGB signal format as well as in YCbCr signal format or in higher-quality YpbPr signal format, connecting with the use of small sized HDMI connectors similar to universal serial bus (USB) connectors, and featuring other functions which are not available in the common DVI standards.

Also, the HDMI standards allow an electronic device at the transmitter side to receive extended display identification (EDID) data from another electronic device at the receiver side before transmitting a video or audio signal to the receiver. This enables the output of each signal in a format corresponding to the display specifications of the receiver.

It is determined by the standards that the EDID data is transmitted in a page of 256 bytes. In practice, the EDID data of 256 bytes is stored in each electronic device for providing the display specifications of its display and in response to a demand from another electronic device, the EDID data is outputted to the another electronic device.

However, electronic devices are often set different in the receiving specifications depending on the local applications at different destinations. Frequently, the EDID data of 256 bytes may be too small to correspond to two or more local applications. Accordingly, each electronic device has to store a plurality of the EDID data which correspond to the different local applications, respectively, and its manufacturing and delivery procedures will hence be troublesome.

Disclosed in Jpn. Pat. Appln. KOKAI Publication No. 11-15425 is a modified manner in which a display data channel (DDC) control signal which transmits data from a display device to its system device is employed for reading and rewriting the EDID data thus to control the display mode of the system device correspondingly.

The present invention has been achieved in view of the foregoing problem and its object is to provide an electronic device and its controlling method where the manufacturing and deliver procedures are simplified while there is no need to store the EDID data separately for a plurality of different receiving specifications.

According to one aspect of the present invention, there is provided an electronic device which outputs data indicating its receiving specifications in response to an demand of acquiring the data received from the outside, the electronic device comprising:
an input unit configured to receive a signal including a video or an audio; a processing unit configured to generate a signal corresponding to the video or the audio from the signal received by the input unit;
a storage unit configured to store data indicating a plurality of receiving specifications prepared for the processing unit; setting units configured to set the receiving specifications assigned to the processing unit; a memory unit configured to read out data indicating the receiving specifications set by the setting units from the storage unit and save the data;
and output units configured to output the data memorized in the memory unit in response to a demand for acquiring the data indicating the receiving specifications received from the outside.

According to another aspect of the present invention, there is provided a method of controlling an electronic device which outputs data indicating its receiving specifications in response to an demand of acquiring the data received from the outside, the method comprising: a first step of storing in a storage unit data indicating a plurality of receiving specifications prepared for a processing unit which generates a signal corresponding to a video or an audio from an inputted signal; a second step of setting the receiving specifications assigned to the processing unit; a third step of reading out the data indicating the receiving specifications set in the second step from the storage unit and saving the data into a memory unit; and a fourth step of outputting the data saved in the memory unit in response to a demand for acquiring the data indicating the receiving specifications received from the outside.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram schematically showing a digital signal transmitting system according to one embodiment of the present invention;
FIG. 2 is a block diagram showing a signal processing system of an optical disk reproducing apparatus in the digital signal transmitting system of the embodiment;
FIG. 3 is a block diagram showing a signal processing system of a television receiver in the digital signal transmitting system of the embodiment;
FIG. 4 is a flowchart showing a procedure of primary operations in the television receiver in the digital signal transmitting system of the embodiment;
FIG. 5 is a view explaining an example of the setting menu displayed on the television receiver in the digital signal transmitting system of the embodiment; and
FIG. 6 is a block diagram showing a modification of the embodiment in which the television receiver is used as a repeater.

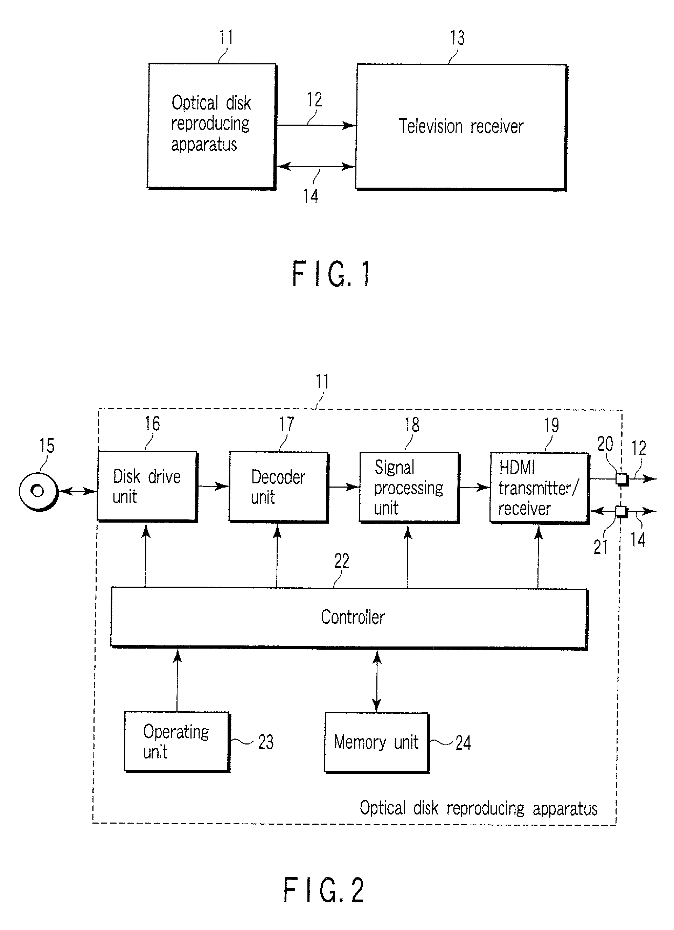

One embodiment of the present invention will be descried in more detail referring to the accompanying drawings. FIG. 1 illustrates a digital signal transmitting system described in the embodiment.
As shown in FIG. 1, denoted by 11 is an optical disk reproducing apparatus which acts as an electronic device at the transmitter side.

The optical disk reproducing apparatus 11 is provided for converting a video or audio signal reproduced from an optical disk into an HDMI standards compliant form which is then transferred via a transmission path 12 to a television receiver 13 as the electronic device at the receiver side.

The television receiver 13 has a function of displaying and reproducing the video and audio signals carried in a received television broadcast signal as well as a function of displaying and playing back the video and audio signals of the HDMI standards compliant form received via the transmission path 12.

In operation, the optical disk reproducing apparatus 11 demands reception of the EDID data via a transmission path 14 from the television receiver 13 before outputting the video and audio signals to the television receiver 13.

The television receiver 13 has stored the EDID data indicating its display specifications (including resolution) and in response to the demand from the optical disk reproducing apparatus 11, dispatches the EDID data via the transmission path 14 to the optical disk reproducing apparatus 11.

This allows the optical disk reproducing apparatus 11 to acknowledge the display specifications of the television receiver 13 based on the acquired EDID data and in turn supply via the transmission path 12 the television receiver 13 with the video and audio signals corresponding to the display specifications.

In particular, the EDID data indicating a plurality of display specifications prepared at the manufacturing process for a plurality of different destinations or receiving operations is stored in a memory and the like of the television receiver 13.

When the television receiver 13 has been installed at a specific place, it can selectively output the EDID data indicating the display specifications assigned to the place from among the various types of EDID data.

Accordingly, the television receiver 13 needs not store the EDID data assigned to each destination or receiving operation of different specifications and its manufacturing and deliver procedures will be simplified.

FIG. 2 illustrates a signal processing system of the optical disk reproducing apparatus 11. The optical disk reproducing apparatus 11 is provided for reading data from an optical disk 15 such as a digital versatile disk (DVD) loaded on its disk drive 16 in response to a command of reproduction.

The data read by the operation of the disk drive 16 is transferred to a decoder 17 and a signal processing unit 18 where it is converted by digitization, error correction, and decoding in a succession into digital video and audio signals.

The decoded digital video and audio signals are received by an HDMI transmitter/receiver 19 where it is converted into an HDMI standards compliant form which is then transmitted via an output terminal 20 to the electronic device (the television receiver 13 in this embodiment) at the receiver side connected to the transmission path 12.

The HDMI transmitter/receiver 19 is provided for requesting via its input/output terminal 21 the EDID data to the electronic device (the television receiver 13) at the receiver side connected to the transmission path 14.

The HDMI transmitter/receiver 19 is provided for receiving via its input/output terminal 21 the EDID data outputted from the electronic device (the television receiver 13) at the receiver side connected to the transmission path 14.

The optical disk reproducing apparatus 11 is totally controlled by a controller 22 for all the operations thereof including the reproducing operation. The controller 22 incorporates a central processing unit (CPU) for receiving operation information transmitted from an operating unit 23 such as a remote controller and controlling each unit such that the operation is reflected on the apparatus.

The controller 22 utilizes a memory unit 24 which includes a read only memory (ROM) in which the control programs executed by the CPU are stored, a random access memory (RAM) for providing a work area for the CPU, and a non-volatile memory in which a variety of setting and control information is stored.

The controller 22 recognizes the display specifications of the electronic device (the television receiver 13) at the receiver side based on the EDID data received by the HDMI transmitter/receiver 19 and controls the signal processing unit 18 to reproduce the video and audio signals corresponding to the specifications.

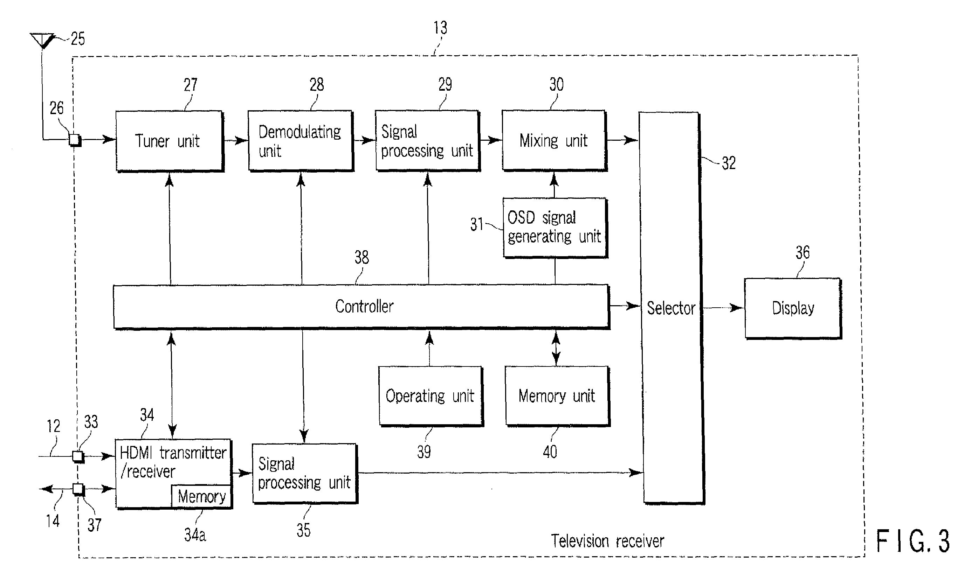

FIG. 3 illustrates a signal processing system of the television receiver 13. In operation, the television broadcast signal is received at an antenna 25 and supplied via an input terminal 26 to a tuner unit 27. The tuner unit 27 is provided for selectively outputting a desired broadcast channel signal from the inputted television broadcast signal.

The television broadcast signal outputted from the tuner unit 27 is transferred to a demodulating unit 28 and a signal processing unit 29 where it is demodulated and processed to an original television signal.

The television signal outputted from the signal processing unit 29 is then mixed by a mixing unit 30 with an OSD signal outputted from an on screen display (OSD) signal generating unit 31 and its mixture is supplied to one input terminal of a selector 32.

Meanwhile, the video and audio signals supplied via the transmission path 12 is supplied via an input terminal 33 to an HDMI transmitter/receiver 34. In the HDMI transmitter/receiver 34, the video and audio signals are converted back to an original signal which has been converted into the video and audio signals by the HDMI transmitter/receiver 19 in the optical disk reproducing apparatus 11 and then supplied via a signal processing unit 35 to another input terminal of the selector 32.

The selector 32 is provided for selectively displaying the signal supplied from the mixing unit 30 and the signal supplied from the signal processing unit 35 on a display 36. The audio component in the signal is transferred to loudspeakers (not shown) for reproduction of sounds.

The demand for receiving the EDID data supplied via the transmission path 14 is supplied via an input terminal 37 to the HDMI transmitter/receiver 34. Upon receiving the demand, the HDMI transmitter/receiver 34 transmits the EDID data indicating the display specifications and stored in its built-in memory 34a to the optical disk reproducing apparatus 11 over the transmission path 14.

All the operations of the television receiver 13 including the above-described operations are totally controlled by a controller 38. The controller 38 incorporates a CPU for controllably determining the operation of each unit with the use of operating information from an operating unit 39 such as a remote controller.

In this case, the controller 38 utilizes a memory unit 40 which includes a ROM in which the control programs executed by the CPU are stored, a RAM for providing a work area for the CPU, and a non-volatile memory in which a variety of setting and control information is stored.

The non-volatile memory in the memory unit 40 also stores the EDID data indicating a plurality of display specifications which are assigned to different destinations or receiving operations.

When the television receiver 13 has been installed at a specific place, the EDID data indicating the display specifications assigned to the place is selectively read out from the various EDID data stored in the non-volatile memory and temporarily saved in the built-in memory 34a of the HDMI transmitter/receiver 34.

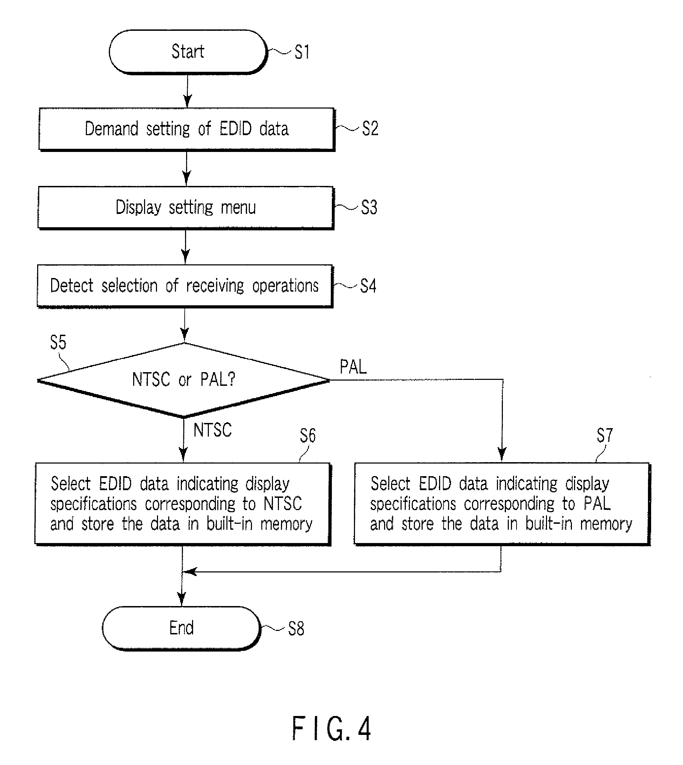

FIG. 4 is a flowchart showing a procedure of operations for, when the television receiver 13 has been installed at a specific place, selectively reading out from the various EDID data stored in the non-volatile memory the EDID data indicating the display specifications assigned to the place and saving the same in the built-in memory 34a of the HDMI transmitter/receiver 34.

The procedure starts (in step S1) with receiving a demand for setting the EDID data in step S2. Then, Step S3 follows where an OSD setting menu is displayed on the display 36 by the controller 38.

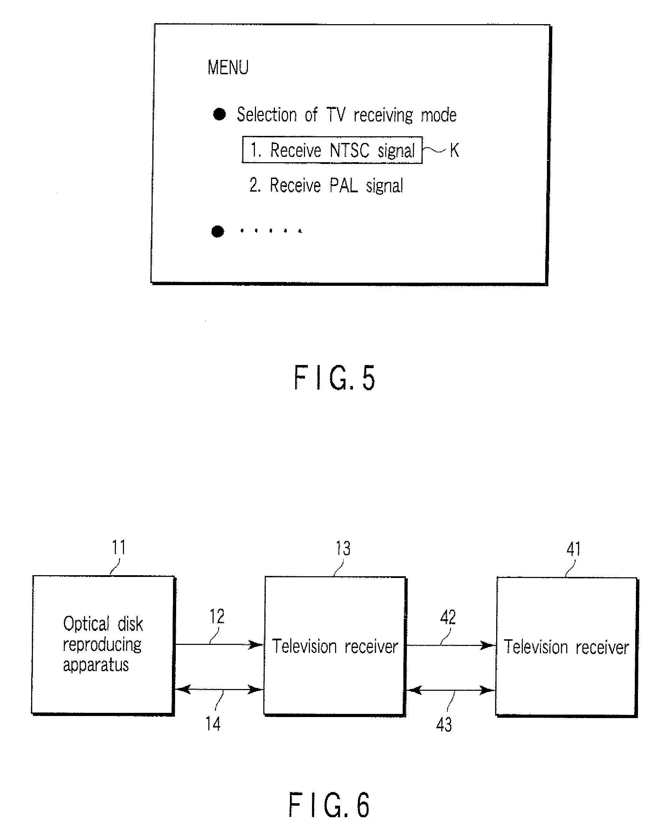

The setting menu may be such a selection screen as shown in FIG. 5 for selecting between a national television system committee (NTSC) signal and a phase alternation by line color television (PAL) signal depending on the place where the television receiver 13 is installed. More specifically, the operating unit 39 is used for moving a cursor K across the screen with its cursor moving key and determining with its decision key thus to select and determine receiving operations suitable to the installation place.

The controller 38 then detects the selection of any receiving operation from the setting menu in step S4 and determines in step S5 whether the NTSC or PAL signal has been selected.

When it is determined that the receiving operation of the NTSC signal has been selected, the controller 38 conducts the operation of Step S6 for selectively reading out from the non-volatile memory of the memory unit 40 the EDID data indicating the display specifications of the NTSC signal and saving the same in the built-in memory 34a of the HDMI transmitter/receiver 34 and terminates the procedure (in step S8).

Alternatively, when it is determined in step S5 that the receiving operation of the PAL signal has been selected, the controller 38 conducts the operation of Step S7 for selectively reading out from the non-volatile memory of the memory unit 40 the EDID data indicating the display specifications of the PAL signal and saving the same in the built-in memory 34a of the HDMI transmitter/receiver 34 and terminates the procedure (in step S8).

The above-described embodiment allows a plurality of the EDID data indicating corresponding display specifications at different destinations or receiving operations to be predetermined and stored in the non-volatile memory of the memory unit 40 so that, when the television receiver 13 has been installed, one of the EDID data indicating the display specification corresponding to the installation place is selected and read out from the non-volatile memory and then saved in the built-in memory 34a of the HDMI transmitter/ receiver 34 before.

When receiving a demand for acquiring the EDID data from the electronic device at the transmitter side (the optical disk reproducing apparatus 11 in the embodiment) of the video and audio signals, the HDMI transmitter/receiver 34 reads out the EDID data from its built-in memory 34a and transmits the same to the electronic device at the transmitter side which can thus gain the corresponding display specifications. As a result, it is unnecessary to store the EDID data separately depending on different receiving specifications and the manufacturing and delivery procedures will be facilitated.

The receiving specifications of the EDID data may include video graphics array (VGA), extended graphics array (XGA), UXGA, and other applications, provided that the electronic device is a personal computer (PC).

FIG. 6 illustrates a modification of the embodiment. In particular, the television receiver 13 is used as a repeater provided between the optical disk reproducing apparatus 11 and another television receiver 41.

The television receiver 13 has a function of directly transmitting video and audio signals reproduced at the HDMI standards compliant form from the optical disk reproducing apparatus 11 to another television receiver 42 over a transmission path 42 and a function of transferring a demand for acquiring the EDID data from the optical disk reproducing apparatus 11 via a transmission path 43 to the another television receiver 42 and transmitting the EDID data received over the transmission path 43 from the another television receiver 42 to the optical disk reproducing apparatus 11.

While the present invention is not limited to the foregoing embodiment, some modifications of its component arrangement are possible without departing from the scope of the present invention. Also, the components defined and described in the embodiment may be implemented in any desired combination for providing other embodiments of the present invention. For example, some of the components may be deleted from all the components described in the embodiment. Further, these components may be appropriately combined with other embodiments.

## Claims

1. An electronic device which outputs data indicating its receiving specifications in response to an demand of acquiring the data received from the outside, the electronic device **characterized by** comprising:
an input unit (34) configured to receive a signal including a video or an audio;
a processing unit (35) configured to generate a signal corresponding to the video or the audio from the signal received by the input unit (34);
a storage unit (40) configured to store data indicating a plurality of receiving specifications prepared for the processing unit (35);
setting units (38, 39) configured to set the receiving specifications assigned to the processing unit (35);
a memory unit (34a) configured to read out data indicating the receiving specifications set by the setting units (38, 39) from the storage unit (40) and save the data; and
output units (34, 38) configured to output the data memorized in the memory unit (34a) in response to a demand for acquiring the data indicating the receiving specifications received from the outside.

2. The electronic device according to claim 1, **characterized in that** the input unit (34) is configured to receive a signal conforming to HDMI standards.

3. The electronic device according to claim 2, **characterized in that** the data indicating the receiving specifications is EDID data.

4. The electronic device according to claim 1, **characterized in that** the setting units (38, 39) are configured to selectively set the receiving specifications corresponding to a plurality of destinations.

5. The electronic device according to claim 1,
**characterized in that** the setting units (38, 39) are configured to set the receiving specifications by displaying a setting menu on a display (36).

6. A method of controlling an electronic device which outputs data indicating its receiving specifications in response to an demand of acquiring the data received from the outside, the method **characterized by** comprising:
a first step of storing in a storage unit (40) data indicating a plurality of receiving specifications prepared for a processing unit (35) which generates a signal corresponding to a video or an audio from an inputted signal;
a second step (S3, S4) of setting the receiving specifications assigned to the processing unit (35);
a third step (S6, S7) of reading out the data indicating the receiving specifications set in the second step (S3, S4) from the storage unit (40) and saving the data into a memory unit (34a); and
a fourth step (34, 38) of outputting the data saved in the memory unit (34a) in response to a demand for acquiring the data indicating the receiving specifications received from the outside.
